# EUROPEAN PATENT SPECIFICATION

(11) **EP 0 515 468 B1**
(45) Date of publication and mention of the grant of the patent: **14.08.1996**
(21) Application number: 91904059.2
(22) Date of filing: 07.02.1991
(51) Int. Cl.: B01D 29/03, B01D 29/56

(54) **FILTER**
FILTER
FILTRE

(30) Priority: 09.02.1990 GB 9003020
(43) Date of publication of application: 02.12.1992
(73) Proprietor: HEPWORTH MINERALS & CHEMICALS LIMITED, Sandbach Cheshire CW11 0SS (GB)
(72) Inventor: WHITE, Michael, High Green, Sheffield S30 4JT (GB)
(74) Representative: Evans, David Charles
(86) International application number: GB9100190
(87) International publication number: WO9112062

(56) References cited:
- EP-A- 0 165 025
- EP-A- 0 234 979
- EP-A- 0 251 634
- AU-A- 589 007
- US-A- 3 907 513

## Description

This invention relates to a filter comprising a plurality of elements arranged in a stack, the elements being of a refractory material.

Filters are widely used in industrial processes to purify fluids and the whole process of filtration is that fluid passes through pores in a membrane and that particulate material and impurities are retained in the membrane by adhesion to the material of the membrane by being unable to pass through the pores. In many industrial processes high temperature fluids are used and, in such cases, a refractory filter has to be used which is not affected by the temperature of the molten fluid. In particular, in metal moulding and casting processes where a high quality metal is to be cast, it is convenient to pass the molten metal directly into the cast or mould through a filter in the space or feed passage to the mould.

The metal supplied to the space frequently includes impurities such as entrained solids and slag.

Refractory filters have been proposed which present to the molten metal a constricted and tortuous path or passage and one form of such a filter has been proposed which comprises two or more ceramic discs arranged in a stack in which each disc has a pattern of holes formed in it; the discs being juxtaposed within the stack and each disc being disposed with respect to an adjacent disc so that each of the holes of one disc is offset with respect to the corresponding holes of said adjacent disc to define a tortuous passage. Indeed, a series of tortuous passages is formed through the stack and the fluid flowing through the stack is required to change direction as it passes therethrough.

An arrangement has also been proposed in which adjacent discs in the stack do not have arrays of holes arranged in the same configuration, but different arrays of holes to define the tortuous paths. In yet another arrangement, the holes are of uniform size for each disc, but the size of the holes is different in adjacent discs, so that when such discs are placed in a stack the smaller holes define a constricted area defining said tortuous path. In such filters it will be appreciated that certain of the passages may give a relatively unconstricted through passage. The extent of deviation of any particular passage from a mean path may vary from area to area of the filter assembly, thus allowing variations in flow rates and impurity retention across the disc area.

EP-A-0234979 discloses a filter assembly comprising a stack of refractory plates of a generally square configuration having holes perforated in lines of the whole area of the plate with alternate lines of holes being offset from the other lines; the alternate plates within the stack are set at right angles to each other, and the plates are spaced apart to provide between each a void area for the material being filtered to gather. The effect of this type of filter is also to give a restricted path to the molten material.

EP-A-0165025 discloses a filter for molten metal comprising a stack of ceramic filter elements; each filter element has a plurality of elongate apertures formed therein which extend between first and second surfaces of the filter. One of said surfaces is recessed in juxtaposition with the apertures, such that in the stack, each neighbouring pair of elements defines a cavity therebetween, and said neighbouring elements contact one another only around the periphery thereof. The disadvantages of this filter are that the cavities result in reduced strength, and the elements are relatively complex to manufacture.

According to one aspect of the present invention, there is provided a filter comprising a plurality of filter elements arranged in a stack; wherein each element is made from a refractory material, has first and second surfaces spaced one from the other in the direction of stacking and has a plurality of elongate openings formed therein which extend between said first and second surfaces; and wherein the openings in at least one element are offset with respect to the openings in at least one other of the elements thereby to define a tortuous path through the filter; characterised in that each element is configured such that the juxtaposed first and second surfaces of each pair of neighbouring elements contact one another. Naturally it will be understood that the two surfaces in contact with each otyer may inevitably have some parts where very small gaps exist. Each element may comprise a planar shape of refractory material having a plurality of longitudinal openings therein. The shape may comprise a peripheral frame supporting a plurality of longitudinal bars, adjacent pairs of which define an opening. The elements may be rectilinear and are preferably of a square or rectangular shape.

In a preferred embodiment of an element the frame is thickened on one side of the bars so as effectively to offset the bars within the frame. Within such an embodiment the elements may be stacked alternately with the thickened part being on separate sides of the stack in different layers so that the tortuous path is created. In a typical embodiment the thickened part is 1½ times the thickness of the bars.

In one embodiment of the invention, the bars are parallel to the sides of the frame of the element; in an alternative embodiment, the bars are set at an angle thereto.

In a variation, the elements of the stack may be arranged so that some of the bars are set at right angles to the bars of other elements so to form an effective grid pattern when viewed from one end.

The bars may be of a square or rectangular cross-section but, in certain applications, they may be formed with a transverse cross-section representing a wedge or truncated triangle. Such a cross-section may help with flow patterns in certain applications.

The elements of the filter may be made out of any suitable refractory material, such as the refractory clay or an alumino silicate material.

The stack may be contained in a holder and loosely assembled therein, or the elements of the stack may be joined using a suitable adhesive, or by silica welding the elements of the stack.

The stack will be placed in use in the path of liquid such as a molten metal and a ferrostatic back pressure will be established. This pressure will be determined by the number of elements in the stack and the nature of the tortuous path therethrough.

Following is a description by way of example only and with reference to the accompanying drawings of methods of carrying the invention into effect.

In the drawings :
Figure 1 is a general perspective view of a stack of elements forming the filter of the present invention
Figure 2 is a sectional view of the filter of Figure 1 on the lines II.II of Figure 1.
Figure 3 shows a cross-section similar to Figure 2 but of a first alternative stack of elements, and
Figure 4 shows a second alternative, again in cross-section.

Referring now to the drawings, the filter comprises a stack 1 of, in this example, four elements 2 each of an identical construction. The elements each comprise a square frame 3 of refractory material, having a grid of bars 4 extending parallely across the frame and parallel with the sides thereof. The bars 4 are of a uniform size and of a rectangular cross-section and, in this example, are spaced from each other by gaps 6, whose dimensions are the same as the bars 4.

Side 7 of the frame 3 is wider than the opposite side of the frame by an amount which is not a whole multiple of the width of the other side and in this embodiment about 1½ times the width of the opposite side.

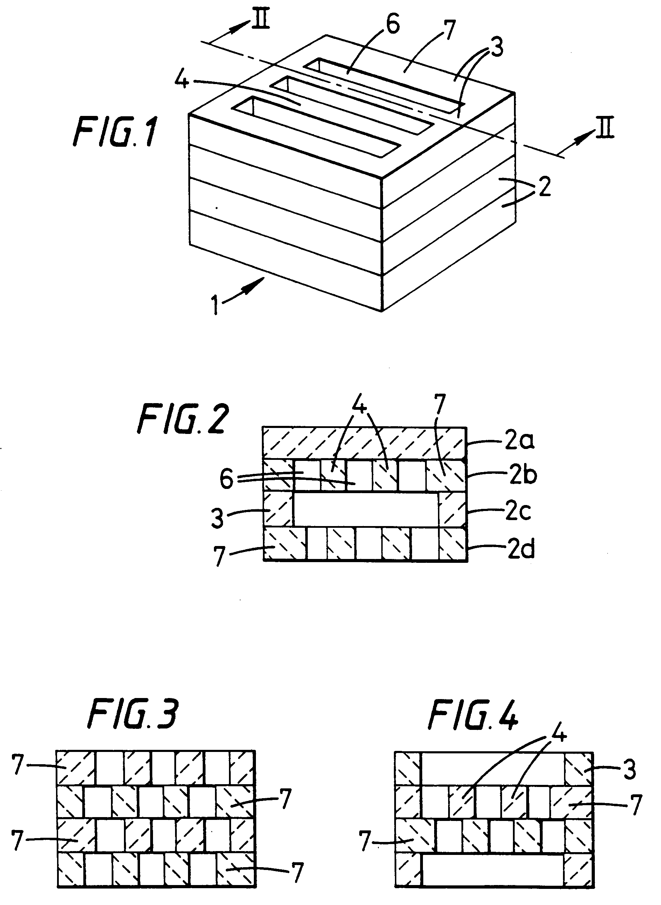

The elements 2 can be stacked in a support frame (not shown) or, as in this example, they may be assembled together and secured by means such as a silica or ceramic welding technique. The disposition of the elements in the filter is illustrated in Figure 2, which shows where the elements are set with the bars of one at right angles to the bars of the adjacent element. In this example there are four elements 2 which are designated 2a, 2b, 2c and 2d.

It can be seen from Figure 2 that the elements 2b and 2d have the bars 4 running at right angles to the elements 2a and 2c. In this example, the element 2b is turned by 90° with respect to the adjacent element 2a. The element 2c is turned through 180° with respect to element 2a and element 2d is turned through 270° with respect to element 2a. The effect of this is particularly noticeable in Figure 2, if attention is given to the elements 2b and 2d. It will be seen here that the thickened side 7 is to the right of the Figure in element 2b and in the left of the Figure in element 2d. This has the effect of offsetting the bars 4 in the two elements 2b and 2d which are parallel to each other by the distance equivalent to half that of the width of the gap of the bars.

Similarly, the two elements 2a and 2b have their thickened sides 7 on opposite sides of the filter. Thus, a similar effect is obtained between these two elements.

By this disposition of the elements, it will be appreciated that a through-passage is obtained from the top to the bottom of the filter, but that fluid passing through the filter will not have a direct path from top to bottom but will have a tortuous path through the inter-connecting gaps of adjacent elements in the filter. This tortuous path increases the filtering effect obtained by the filter and maximizes the filter surface area to which particles of material, such as impurities, are exposed and thus ensures clear liquid only emerges from the exit of the filter.

Although in this example, only four filter elements have been shown, it will be appreciated that the filter itself may be made up of a larger stack of elements and that their disposition may be varied. For example, if reference is made to Figures 3 and 4, a four-element stack is shown in these two Figures which are disposed in a different manner.

For example, in Figure 3 the bars 4 are all disposed in the same direction, but the elements are alternately changed with the thick side 7 in each layer being on the opposite side to the side 7 of the adjacent layers. The effect of this is to give a sinuous path through the filter.

In Figure 4, a variation of the arrangement of the elements in Figure 2 is shown. In this Figure the elements 2a and 2d are shown with the bars 4 parallel and the elements in 2b and 2c are at right-angles to the elements of 2a and 2d.

The effect of varying the element disposition can also be used to effect a control or choking effect on the flow of material through the filter. Thus a controlled back pressure on the metal being fed to a casting or moulding may be designed into the whole of a casting or moulding operation by arrangement of the filter elements.

In the elements of the filters above-described, the basic form of the element has been such that the gaps 6 and the bars 4 are of substantially the same size and are offset by a distance equivalent to half the width of a gap or bar. It will be appreciated that, according to any particular application for which a filter element is designed, that the relative sizes of the bars 4 and the gaps 6 and the side 7 may be varied. Also, it is not essential that the bars 4 are of a rectangular section. This is convenient for common moulding processes but the bars may be formed of a circular cross-section or conveniently of a wedge-shaped cross-section such as a truncated triangle. Thus many variations in the design of the element and the assembly of the element to form a filter are possible without departing from the scope of the invention.

### EXAMPLE

In one particular example of an element 2, as previously described, the element is manufactured by pressing in a mould an alumino silicate composition having the following analysis:

| | | |
|---|---|---|
| Silica | Si0₂ | 56% |
| Alumina | Al₂0₃ | 40% |
| Titanium Dioxide | Ti0₂ | 1% |
| Ferrous Oxide | Fe₂0₃ | 1% |
| Quicklime | Ca0 | 0.15% |
| Magnia | Mg0 | 0.2% |
| Sodium Oxide | Na₂0 | 0.25% |
| Potassium Oxide | K₂0 | 1.4% |

The green pressing was extracted from the mould and fired at a temperature of about 1120°C. The elements 2, when fired, were placed in a stack to form a filter and the elements were connected together by a ceramic welding technique. In one embodiment of the example, the elements were bonded together using a suitable high temperature adhesive.

## Claims

1. A filter for filtering molten metals comprising a plurality of filter elements (2) arranged in a stack (1); wherein each element (2) is made from a refractory material, has first and second surfaces spaced one from the other in the direction of stacking and has a plurality of elongate openings (6) formed therein which extend between said first and second surfaces; and wherein the openings (6) in at least one element (2) are offset with respect to the openings (6) in at least one other of the elements (2) thereby to define a tortuous path through the filter; characterised in that each element (2) is configured such that the juxtaposed first and second surfaces of each pair of neighbouring elements (2) contact one another with no gap therebetween.

2. A filter as claimed in claim 1 wherein each element (2) is rectilinear.

3. A filter as claimed in claim 1 or claim 2 characterised in that each element (2) comprises a planar shape, and said openings (6) extend in spaced parallel relationship across said shape.

4. A filter as claimed in claim 3 characterised in that the planar shape comprises a peripheral frame (3) and a plurality of spaced parallel bars; wherein each opening (6) is defined by two adjacent bars.

5. A filter as claimed in claim 4 characterised by comprising at least one element (2) in which the elongate openings (6) are disposed asymmetrically with respect to the openings in the neighbouring element (2); whereby, on arranging the elements within the stack (1) the juxtaposed openings (6) of each element (2) are staggered to define a tortuous fluid path through said stack (1).

6. A filter as claimed in claim 5 characterised in that the asymmetry of the openings (6) in the one element is effected by thickening of said frame (3) on one side thereof to offset said bars within the frame (3).

7. A filter as claimed in claim 6 characterised in that the thickened part is approximately 1.5 times the thickness of the bars (4).

8. A filter as claimed in any of claims 5 to 7 characterised in that the elements (2a, 2b, 2c, 2d) each have the same shape.

9. A filter as claimed in any one of claims 4 to 8 characterised in that said openings (6) are parallel to the sides of the frame (3).

10. A filter as claimed in any one of claims 4 to 8 characterised in that said openings (6) are at an angle to the sides of the frame (3).

11. A filter as claimed in any preceding claim characterised in that said plurality of elements (2) are arranged in the stack (1) such that the openings (6) in at least one element (2a, 2c) are disposed at an angle with respect to the openings (6) in another element (2b, 2d).

12. A filter as claimed in claim 11 characterised in that the openings (6) in said one element (2a, 2c) are disposed substantially perpendicular to the openings (6) in said other element (2b, 2d).

13. A filter as claimed in any preceding claim characterised in that the refractory material is a refractory clay or an alumino-silicate material.

## Patentansprüche

1. Filter zum Filtrieren von geschmolzenen Metallen mit mehreren Stapel (1) angeordneten Filterelementen (2); wobei jedes Element (2) aus einem feuerfesten Material gefertigt ist, erste und zweite in Stapelrichtung voneinander beabstandete Oberflächen aufweist und mehrere darin gebildete langgestreckte öffnungen (6) besitzt, die sich zwischen den ersten und zweiten Oberflächen erstrecken; und wobei die Öffnungen (6) in mindestens einem Element (2) gegenüber den Öffnungen (6) in mindestens einem weiteren der Elemente (2) so versetzt sind, daß dadurch ein gewundener Weg durch das Filter gebildet wird; dadurch gekennzeichnet, daß jedes Element (2) so ausgebildet ist, daß die nebeneinander angeordneten ersten und zweiten Oberflächen eines jeden Paars benachbarter Elemente (2) einander ohne einen Spalt dazwischen berühren.

2. Filter nach Anspruch 1, wobei jedes Element (2) geradlinig begrenzt ist.

3. Filter nach Anspruch 1 oder 2, dadurch gekennzeichnet, daß jedes Element (2) eine planare Form beinhaltet und sich die Öffnungen (6) parallel beabstandet über die Form erstrecken.

4. Filter nach Anspruch 3, dadurch gekennzeichnet, daß die planare Form einen umgrenzenden Rahmen (3) sowie mehrere beabstandete parallele Stege aufweist, wobei jede Öffnung (6) durch zwei benachbarte Stege begrenzt ist.

5. Filter nach Anspruch 4, dadurch gekennzeichnet, daß es mindestens ein Element (2) beinhaltet, in dem die langgestreckten Öffnungen (6) asymmetrisch in bezug auf die Öffnungen im benachbarten Element (2) angeordnet sind; wodurch bei Anordnen der Elemente in Stapel (1) die nebeneinander angeordneten Öffnungen (6) eines jeden Elements (2) gestaffelt sind und so einen gewundenen Fluidweg durch den Stapel (1) bilden.

6. Filter nach Anspruch 5, dadurch gekennzeichnet, daß die Asymmetrie der Öffnungen (6) in dem einen Element dadurch herbeigeführt wird, daß der Rahmen (3) auf einer Seite desselben verdickt wird, um die Stege innerhalb des Rahmens (3) zu versetzen.

7. Filter nach Anspruch 6, dadurch gekennzeichnet, daß der verdickte Teil etwa 1,5 mal die Dicke der Stege (4) aufweist.

8. Filter nach Ansprüchen 5 bis 7, dadurch gekennzeichnet, daß die Elemente (2a, 2b, 2c, 2d) jeweils die gleiche Form haben.

9. Filter nach einem der Ansprüche 4 bis 8, dadurch gekennzeichnet, daß die Öffnungen (6) parallel zu den Seiten des Rahmens (3) sind.

10. Filter nach einem der Ansprüche 4 bis 8, dadurch gekennzeichnet, daß die öffnungen (6) einen Winkel mit den Seiten des Rahmens (3) bilden.

11. Filter nach den vorhergehenden Ansprüchen, dadurch gekennzeichnet, daß die mehreren Elemente (2) im Stapel (1) so angeordnet sind, daß die Öffnungen (6) in mindestens einem Element (2a, 2c) in einem Winkel zu den Öffnungen (6) in einem anderen Element (2b, 2d) angeordnet sind.

12. Filter nach Anspruch 11, dadurch gekennzeichnet, daß die öffnungen (6) in dem einen Element (2a, 2c) im wesentlichen senkrecht zu den Öffnungen (6) in dem anderen Element (2b, 2d) angeordnet sind.

13. Filter nach den vorhergehenden Ansprüchen, dadurch gekennzeichnet, daß es sich bei dem feuerfesten Material um einen feuerfesten Ton oder um ein Aluminosilikatmaterial handelt.

## Revendications

1. Filtre pour la filtration de métaux fondus, comprenant une pluralité d'éléments de filtre (2) arrangés dans un empilement (1); dans lequel chaque élément (2) est fait en matériau réfractaire, possède une première et une deuxième surfaces espacées l'une de l'autre dans la direction de l'empilage et possède une pluralité d'ouverture: oblongues (6), formées dans celui-ci, qui se prolongent entre lesdites première et deuxième surfaces; et dans lequel les ouvertures (6) sont décalées dans au moins un élément (2) par rapport aux ouvertures (6) dans au moins un autre des éléments (2), en définissant ainsi un trajet tortueux à travers le filtre; caractérisé en ce que chaque élément (2) est configuré de manière à ce que les première et deuxième surfaces juxtaposées de chaque paire d'éléments adjacents (2) soient en contact l'une avec l'autre, sans interstice entre elles.

2. Filtre selon la revendication 1, caractérisé en ce que chaque élément est rectiligne.

3. Filtre selon la revendication 1 ou la revendication 2, caractérisé en ce que chaque élément (2) comprend une forme plane, et en ce que lesdites ouvertures (6) se prolongent en une relation d'espacement parallèle en travers de ladite forme.

4. Filtre selon la revendication 3, caractérisé en ce que la forme plane comprend un cadre périphérique (3) et une pluralité de barres espacées parallèles; dans lequel chaque ouverture (6) est définie par deux barres adjacentes.

5. Filtre selon la revendication 4, caractérisé en ce qu'il comprend au moins un élément (2) dans lequel les ouvertures oblongues (6) sont disposées de manière asymétrique par rapport aux ouvertures dans l'élément adjacent (2); ce par quoi, lors de l'arrangement des éléments au sein de l'empilement (1), les ouvertures juxtaposées (6) de chaque élément (2) sont décalées pour définir un trajet tortueux pour un fluide à travers ledit empilement (1).

6. Filtre selon la revendication 5, caractérisé en ce que l'asymétrie des ouvertures (6) dans un élément est réalisée par l'épaississement dudit cadre (3) sur un côté de celui-ci, pour décaler lesdites barres au sein du cadre (3).

7. Filtre selon la revendication 6, caractérisé en ce que la partie épaissie est environ égale à 1,5 fois l'épaisseur des barres (4).

8. Filtre selon l'une quelconque des revendications 5 à 7, caractérisé en ce que les éléments (2a, 2b 2c, 2d) ont chacun la même forme.

9. Filtre selon l'une quelconque des revendications 4 à 8, caractérisé en ce que lesdites ouvertures (6) sont parallèles aux côtés du cadre (3).

10. Filtre selon l'une quelconque des revendications 4 à 8, caractérisé en ce que lesdites ouvertures (6) font un angle par rapport aux côtés du cadre (3).

11. Filtre selon l'une quelconque des revendications précédentes, caractérisé en ce que ladite pluralité d'éléments (2) est arrangée dans l'empilement (1) de manière à ce que les ouvertures (6) dans au moins un élément (2a, 2c) soient disposées suivant un angle par rapport aux ouvertures (6) dans un autre élément (2b, 2c).

12. Filtre selon la revendication 11, caractérisé en ce que les ouvertures (6) dans ledit un élément (2a, 2c) sont disposées substantiellement de manière perpendiculaire aux ouvertures (6) dans ledit autre élément (2b, 2d).

13. Filtre selon l'une quelconque des revendications précédentes, caractérisé en ce que le matériau réfractaire est une argile réfractaire ou un matériau d'alumino-silicate.
